# EUROPEAN PATENT APPLICATION

(11) **EP 0 590 602 A1**
(43) Date of publication of application: **06.04.1994**
(21) Application number: 93115639.2
(22) Date of filing: 28.09.1993
(51) Int. Cl.: H01K 1/34, H01K 1/32

(54) **Double-bulb halogen lamp and lighting system**

(30) Priority: 28.09.1992 JP 257932/92; 28.09.1992 JP 257933/92; 28.09.1992 JP 257934/92; 29.09.1992 JP 259264/92; 30.03.1993 JP 72131/93; 31.08.1993 JP 216414/93
(71) Applicant: TOSHIBA LIGHTING & TECHNOLOGY CORPORATION, Shinagawa-ku, Tokyo (JP)
(72) Inventor: Kihara, Kunihiko, Yokosuka-shi, Kanagawa-ken (JP); Kamio, Nobuyuki, Yokosuka-shi, Kanagawa-ken (JP); Bessho, Makoto, Kanagawa-ku, Yokohama-shi (JP); Sakai, Makoto, Chigasaki-shi, Kanagawa-ken (JP)
(74) Representative: Henkel, Feiler, Hänzel & Partner

(57) **Abstract**

This invention relates to a double-bulb halogen lamp with a halogen lamp in the external bulb and a lighting system using the same lamp, and more particularly to a double-bulb halogen lamp in which an infrared-ray reflecting film formed on a halogen lamp and a cylindrical external bulb are combined. The invention is characterized by comprising a halogen lamp (1) which has a filament (6) placed in a tubular bulb (2) on whose surface an infrared-ray reflecting film (8) is formed, so that the filament (6) may be almost on the central axis of the bulb (2), and which seals halogen gas in it, and a cylindrical external bulb (10) in which the lamp is placed. With this arrangement, the infrared-ray reflecting film (18) formed on the halogen lamp (1) cuts off the infrared rays emitted from the lamp, so that the cylindrical external bulb (10) is placed the closer to the lamp and the temperature distribution on the external bulb (10) is made uniform. These features enable the entire lamp device to be made more compact.

## Description

This invention relates to a double-bulb halogen lamp with a halogen lamp in the external bulb and a lighting system using the same lamp, and more particularly to a double-bulb halogen lamp in which an infrared-ray reflecting film formed on a halogen lamp and a cylindrical external bulb are combined.

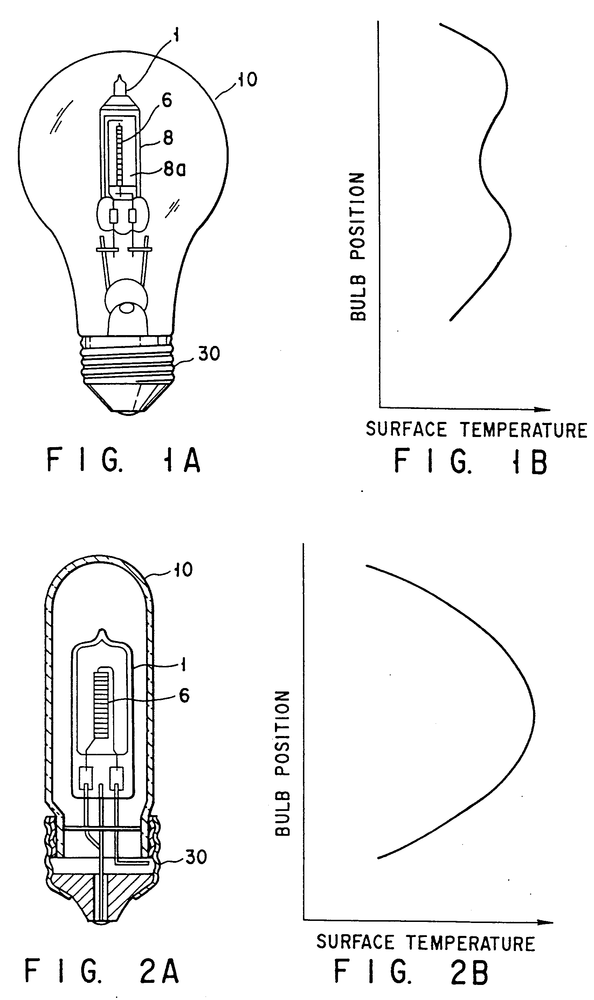

Some conventional double-bulb lamps are disclosed in Jpn. Pat. Appln. KOKAI Publication No. 60-74258 (hereinafter, referred to as the first conventional example) and Jpn. UM Appln. KOKAI Publication No. 1-86161 (hereinafter, referred to as the second conventional example). A double-bulb lamp disclosed in the first conventional example will be described with reference to Figs. 1A and 1B. The lamp has a pear-shaped bulb 10 serving as an external bulb connected to a metal base 30. The bulb 10 has a halogen lamp 1 in it, which seals in a filament 6 laid across lead-in wires. The other ends of the lead-in wires are connected to two lead wires, respectively, via molybdenum foils. These wires are further connected to two lead wires secured in a stem via crossing members. The two lead wires are electrically connected to the conductor portions of the base 30. In the halogen lamp 1, a light-transmitting tubular member 8a is provided on whose outer surface an infrared-ray reflecting film 8 is formed so as to surround the filament 6. The reflecting film reflects the infrared rays emitted from the filament 6 toward the filament 6, thereby improving the efficiency.

Although a miniaturized halogen lamp 1, an advantage of the halogen lamp, is used, the pear-shaped bulb 10 prevents the double-bulb lamp as a whole from being more compact.

The temperature distribution on the surface of the double-bulb lamp 10 is shown as in Fig. 1B resulted from the tests conducted by the inventors of the present invention. Here, the bulb position in Fig. 1B corresponds to the position between the base to the tip of the bulb in the axis direction in Fig. 1A. As seen from the figure, the surface temperature of the bulb 10 at the portions facing the light-transmitting tubular member 8a on which the infrared-ray reflecting film 8 is formed is lower than at the other portions. In contrast, the surface temperature of the bulb 10 at the remaining portions is relatively high because the infrared rays emitted from the halogen lamp 1 are not cut off. As a result, the temperature distribution on the surface of the bulb 10 becomes non-uniform, causing distortion.

Next, a double-bulb lamp disclosed in the second example will be explained, referring to Figs. 2A and 2B. The lamp has a cylindrical bulb 10 serving as an external bulb connected to a metal base 30. In the bulb 10, an incandescent lamp 1 sealing in a filament 6 laid across lead-in wires is arranged. An infrared-ray reflecting film is not formed on the incandescent lamp 1, which thus does not reflect the infrared rays emitted from the filament 6 toward the filament 6 to improve the efficiency.

The temperature distribution on the surface of the bulb 10 of the double-bulb lamp is as shown in Fig. 2B resulted from the tests conducted by the inventors of the present invention. The ordinate in Fig. 2B has the same meaning as in Fig. 1B. As seen from the figure, the temperature is the highest near the center of the filament 6 because the absence of an infrared-ray reflecting film does not cut off the infrared rays emitted from the lamp 1. As a result, the temperature is the highest near the center of the surface of the bulb 10 and lower at both ends, and the temperature distribution is non-uniform on the whole.

Therefore, in the first conventional example, although a small halogen lamp is used, the pear-shaped external bulb or bulb prevents full use of compactness, an advantage of the halogen lamp. That is, because the pear-shaped bulb has a relatively greater maximum diameter, the double-bulb lamp as a whole cannot be made more compact.

In the second conventional example, the bulb serving as the external bulb is cylindrical, and the double-bulb lamp as a whole is more compact than the pear-shape type because the former does not have the maximum diameter portion. In the incandescent lamp, however, the infrared-ray reflecting film is not formed, so that the infrared rays emitted from the incandescent lamp raise the temperature in the external bulb or bulb. For this reason, the diameter of the bulb cannot be made smaller. That is, the more compact the bulb is made, the higher the temperature in the bulb becomes because the bulb comes closer to the incandescent lamp, resulting in the danger that the bulb will break.

Accordingly, the object of the present invention is to provide a compact double-bulb halogen lamp in which a combination of an infrared-ray reflecting film formed on the halogen lamp and a cylindrical external bulb reduces thermal effects on the external bulb, and a lighting system using this lamp.

The foregoing object is accomplished by providing a double-bulb halogen lamp comprising a halogen lamp on whose surface an infrared-ray reflecting film is formed and a cylindrical external bulb in which the lamp is placed. The infrared-ray reflecting film is an infrared-ray cutoff film such as a multilayer interference film or an infrared-ray absorption film formed by laminating a high refractive index layer and a low refractive index layer alternately. The cylindrical external bulb encloses the halogen lamp and may be made of any suitable material.

This invention can be more fully understood from the following detailed description when taken in conjunction with the accompanying drawings, in which:
Fig. 1A is an elevation view of a first conventional double-bulb halogen lamp and Fig. 1B is a temperature distribution diagram of this lamp;
Fig. 2A is an elevation view of a second conventional double-bulb halogen lamp and Fig. 2B is a temperature distribution diagram of this lamp;
Fig. 3 is an elevation view of a double-bulb halogen lamp according to a first embodiment of the present invention;
Fig. 4 is a longitudinal sectional view of an infrared-ray reflecting film;
Fig. 5 shows infrared radiation curves of the halogen lamp;
Fig. 6A is an elevation view of a double-bulb halogen lamp of the present invention and Fig. 6B is a temperature distribution diagram of this lamp;
Fig. 7 is an elevation view of a double-bulb halogen lamp according to a second embodiment of the present invention;
Fig. 8 is a top plan view of a third embodiment of the present invention;
Fig. 9 is a longitudinal sectional view, with portions broken away, of a holder of the third embodiment;
Fig. 10 is a longitudinal sectional view, with portions broken away, of a lighting system according to a fourth embodiment of the present invention;
Fig. 11 is a perspective view of a desk lamp of the forth embodiment;
Fig. 12 is an enlarged view of a portion where the external bulb is fixed in a fitting groove in a double-bulb halogen lamp according to a fifth embodiment of the present invention;
Fig. 13 is an enlarged view of a portion where the external bulb of a modification of the fifth embodiment is fixed in a fitting groove;
Fig. 14 is an enlarged view of a portion where the external bulb of another modification of the fifth embodiment is fixed in a fitting groove;
Fig. 15 is an elevation view of a double-bulb halogen lamp according to a sixth embodiment of the present invention;
Fig. 16 is a top plan view of the holder of Fig. 15;
Fig. 17 is a sectional view taken along line I-I; and
Fig. 18 is an enlarged view of the state where the bulb changer and its hook are engaged with the opening in the outer surface of the holder of Fig. 17.

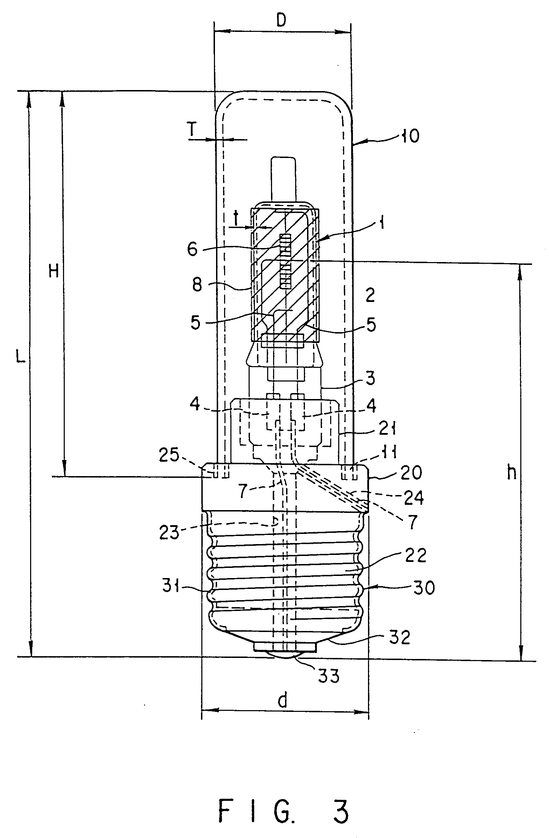

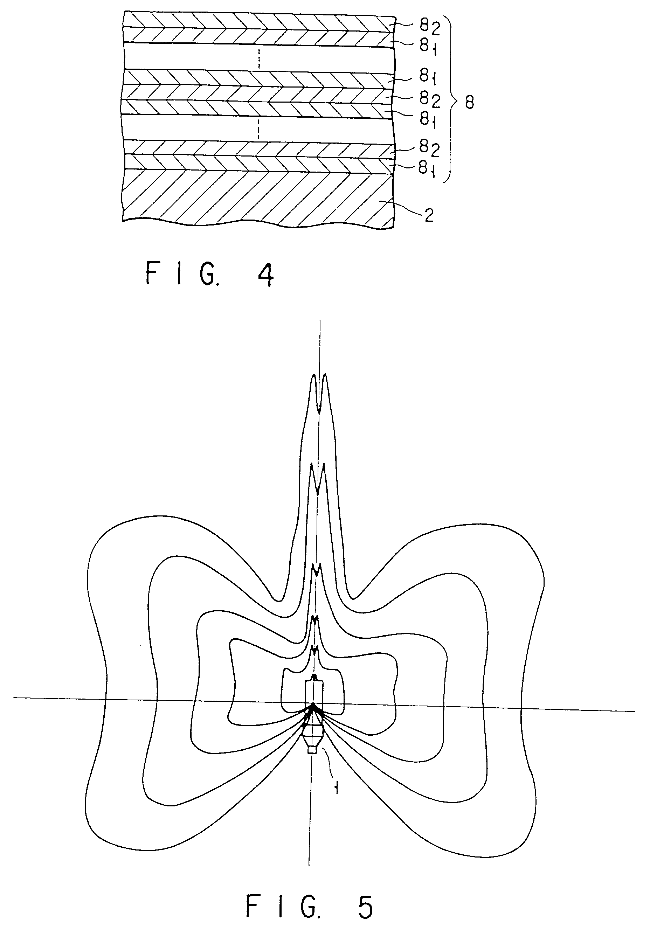

A first embodiment of the present invention will be explained with reference to Figs. 3 and 4.

In a double-bulb halogen lamp shown in Fig. 3, a halogen lamp 1 on which an infrared-ray reflecting film is formed is placed in a cylindrical external bulb 10 of hard glass. The halogen lamp 1 has a tubular (T-type) bulb 2 made of quartz glass. At one end of the bulb 2, a press-sealed portion 3 is formed to seal inert gases such as halogen gas, nitrogen, and argon. In the sealed portion 3, a pair of metal foil conductors 4, 4 made of, for example, molybdenum is sealed. These metal foil conductors 4, 4 are connected to internal lead wires 5, 5. These internal lead wires 5, 5 are introduced into the bulb 2. Across them, a filament 6 made of tungsten coils is laid. The filament 6 is located so that the coil axis may be positioned almost on the bulb axis. The pair of metal foil conductors 4, 4 sealed into the sealed portion 3 is connected to external lead wires 7, 7.

On the surface of the halogen lamp 1, an infrared-ray reflecting film 8 or a visible light-transmitting infrared-ray reflecting film is formed. The infrared-ray reflecting film 8 is a multilayer interference film, which is formed by laminating a high refractive index layer 8₁ of metal oxide and a low reflective index layer 8₂ of metal oxide alternately into a multilayer (for example, a total of 6 to 17 layers) as shown in Fig. 4. The high refractive index layer 8₁ is made of titanium oxide (TiO₂), tantalum oxide (Ta₂O₅), zirconium oxide (ZrO₂), zinc sulfide (ZnS), etc. The low refractive index layer 8₂ is made of silicon dioxide (SiO₂), magnesium fluoride (MgF₂), etc. Practically, titanium oxide is used for the high refractive layer 8₁, and silicon dioxide is used for the low refractive layer 8₂. The multilayer is formed on the surface of the bulb 2 so as to cover at least the overall length of the filament 6.

The halogen lamp 1 is secured to a cylindrical holder 20. The cylindrical holder 20 is made of an insulating material, such as heat-resistant synthetic resin or ceramic. A support bulb section 21 for supporting the sealed portion of the lamp 1 is formed at one end of the holder 20 and a screw-threaded bulb section 22 is formed at the other end. In the support bulb section 21, the press-sealed portion 3 of halogen lamp 1 is fitted. The press-sealed portion 3 is bonded to the holder 20 with an adhesive (not shown), whereby the halogen lamp 1 is secured to the holder 20.

The screw-threaded bulb section 22 formed at the other end of the holder 20 is covered with a metal base 30 serving as an external terminal. The base 30 is of the E26 type. The base shell portion 31 is screwed on the screw-threaded bulb section 22 of the holder 20 and hermetically bonded with each other with an adhesive. The base shell portion 31 is provided with an eyelet terminal 33 serving as an electrical terminal, with cement 32 between them.

The holder 20 has a through hole 23 in its center. Of the pair of external lead wires 7, 7 taken out from the press-sealed portion 3 of the halogen lamp 1, one external lead wire 7 is directed to the eyelet terminal 33 of the base 30 via the through hole 23, and is soldered to the eyelet terminal 33. The other external lead wire 7 is directed to the opening of the base shell 31 through an insert hole 24 formed in the sidewall of the holder 20 and is soldered to the base shell 31.

In one end of a flange section 21 of the holder 20, a fitting groove 25 is formed so as to enclose the support bulb section 22. In the fitting groove 25, the opening end 11 of the external bulb 10 is fixed. The external bulb is made of hard glass and is closed at one end and open at the other end. The opening end 11 is fixed into the fitting groove 25 and bonded with each other with an adhesive (not shown) of silicon or the like.

The surface of the external bulb 10 acting as light-diffusing means may be clouded by frosting or by forcing silicon dioxide powder to adhere to the surface. This allows the light passing through the bulb 10 is diffused to produce a soft light.

The external bulb 10 may have a light interference film serving as color temperature conversion means. In this case, with a light interference film center cut wavelength of 620 nm, when the cut rate is made as low as down to 20%, temperatures (approximately 3500 K) of the cold color group can be obtained, and when the cut rate is made as high as 20% and up to approximately 30%, temperatures (approximately 4000 K) of daylight colors can be obtained. When neodymium is mixed in glass in forming the external bulb 10, yellow light is cut off and the red and green groups seem brighter. Neodymium may, of course, be mixed in the light interference film.

If in the double-bulb halogen lamp, the thickness of the bulb 2 of the halogen lamp 1 is t and the thickness of the external bulb 10 is T, T > t holds. Nearly T ≧ 1.1t is effective. Practically, when the outer diameter D of the external bulb 10 is 23 mm, the thickness T of the external bulb 10 is 1.5 mm and the thickness t of the bulb 2 is 1.2 mm. Further, the total length L of the double-bulb halogen lamp is 94.5 mm, the height H of the external bulb 10 is 64.5 mm, the height h of the filament is 66 mm, and the outer diameter d of the holder 20 is 28 mm. For general practicing modes, suitable dimensions are as follows: the outer diameter of the tubular bulb 2 of the halogen lamp 1 is from 10 to 15 mm, the outer diameter of the external bulb 10 is from 20 to 30 mm, the length of the external bulb 10 is from 60 to 70 mm, and the thickness of the external bulb 10 is from 1 to 2 mm. the length from the top of the external bulb 10 to the tip of the base 30 is preferably 110 mm or less.

The operation of the present embodiment will be described, referring to Figs, 5, 6A and 6B. Although most of the infrared rays emitted from the halogen lamp 1 are reflected by the infrared-ray reflecting film 8 to the filament 6, some in the infrared wavelength range pass through the film. For instance, infrared rays with a wavelength of 1200 nm have a characteristic represented by infrared radiation curves shown in Fig. 5. As seen from the figure, the infrared rays emitted are distributed so as to draw curves with straight-line portions along the sides of the bulb 2 of the halogen lamp 1. By placing the cylindrical external bulb 10 of a suitable length so as to agree with the straight-line portion, the temperature distribution on the surface of the cylindrical portion of the external bulb 10 becomes almost uniform.

Because the heat accumulated in the external bulb 10 is released positively through the through hole 23 made in the holder 20, the infrared rays emitted from the halogen lamp 1 are released to the outside world via the through hole 23.

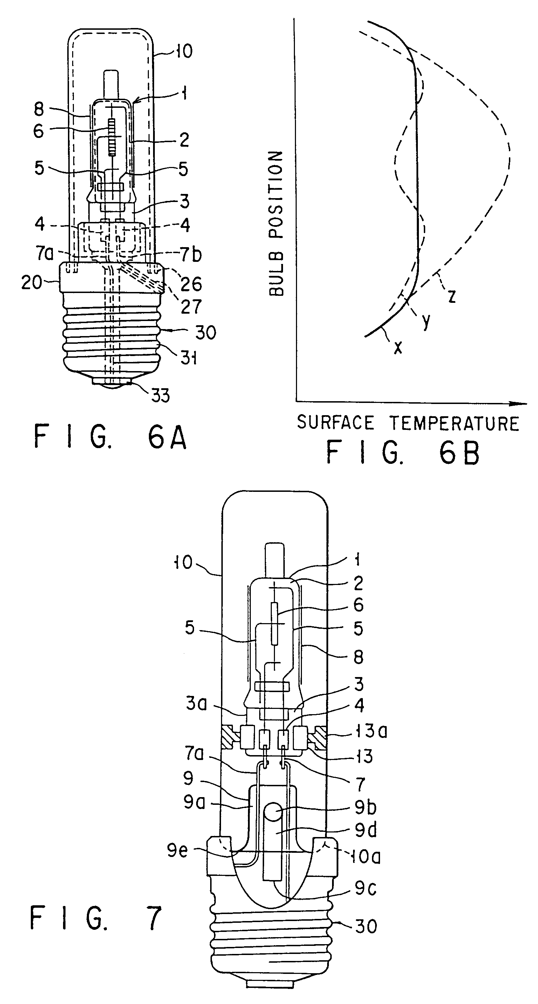

The effect of this embodiment will be described. The temperature distribution on the external bulb 10 is shown in Figs. 5, 6A and 6B. In Fig. 6B, x indicates the temperature distribution in the present embodiment, y is that in the first conventional example, and z is that of the second conventional example. The bulb position on the ordinate axis in Fig. 6B corresponds to the bulb position in the axis direction of Fig. 6A. From the figure, it will be understood that by a multiplier effect of the halogen lamp 1 on which the infrared-ray reflecting film 8 is formed and the external bulb 10 makes the temperature distribution on the surface of the external bulb 10 almost uniform. As a result, the external bulb 10 can be made smaller, resulting in the more compact double-bulb halogen lamp of this type.

The almost uniform temperature distribution on the external bulb 10 prevents the distortion of the glass of the external bulb 10 as much as possible. Because the longitudinal temperature distribution of the halogen lamp 1 and filament 6 can be made uniform, not only the local vaporization of tungsten from the filament 6 can be suppressed, but also the shortening of the service life of the halogen lamp 1 due to burnout of the filament 6 can be prevented. Because the external bulb 10 is filled with air, this prevents deoxidization of the infrared-ray reflecting film 8 formed of a metal oxide film, suppressing the deterioration of the film.

Because the thickness T of the external bulb 10 is made greater than the thickness t of the bulb 2, the mechanical strength of the external bulb 10 is improved. Consequently, should the halogen lamp 1 break and its fragments hit the external bulb 10, the break of the external bulb 10 can be prevented, thereby eliminating the flying about or falling out of the fragments.

A second embodiment of the present invention will be described with reference to Fig. 7.

Fig. 7 shows a double-bulb halogen lamp with a halogen lamp 1 on which an infrared-ray reflecting film 8 is formed. The halogen lamp 1 is the same as that in the first embodiment and its explanation will be omitted. External conductors 7, 7 electrically connected to the halogen lamp 1 are welded to seal-in wires 7a, 7a. The seal-in wires 7a, 7a are sealed in a hard-glass stem 9. In the stem 9, a passage is formed through which gas can flow between the inside of the external bulb 10 and the inside of a metal base 30. Specifically, a glass bulb 9d is welded one end of which forms an opening 9b connected to a press portion 9a of the stem 9 and the other end 9c of which is open to form a passage allowing air to flow in and out. Further, a peripheral portion 9e of the stem 9 is welded to a peripheral portion 10a of the external bulb 10 composed of a hard-glass bulb with one end open, to form a double-bulb halogen lamp. The external bulb 10 and the other end 9c of the glass bulb 9d are placed inside and the external bulb 10 is secured non-hermetically to an E26-type base 30 used for ordinary light bulbs, with an adhesive. The seal-in wires 7a, 7a are connected to the conducting portions of the base 30. The seal-in wires 7a, 7a may be connected to additional conductors, which are then connected to the conducting portions of the base 30. Therefore, the double-bulb halogen lamp may be used as a substitute for an ordinary light bulb. The stem 9 and external bulb 10 may be made of quartz glass.

The sides 3a of the sealed portion 3 of the halogen lamp 1 are supported by a support member 13. Specifically, the sides 3a of the sealed portion 3 are gripped by heat-resistant metal members 13, 13 of, for example, stainless steel. The sealed portion is held in place by a ring-like support member 13a which is connected to the metal members 13, 13 and whose diameter is a little larger than that of the inner diameter of the external bulb 10 so as to press the inner surface of the external bulb 10.

In this embodiment, as in the first embodiment, the external bulb 10 may be provided with light-diffusing means or color temperature conversion means. In this case, the operation and effect are the same as those in the first embodiment. General practicing modes of the double-bulb halogen lamp are also the same as those in the first embodiment.

Since the basic operation of this embodiment is the same as that of the first embodiment, its explanation will be omitted. Only things unique to the present embodiment will be described. The heat emitted from the halogen lamp 1 in the external bulb 10 heats the air in the external bulb 10. The heated air flows from the opening 9c connected to the press portion 9a of the glass stem 9 through the glass bulb 9d and is discharged toward the base 30.

Therefore, because the external bulb 10 is filled with air, this prevents deoxidization of the infrared-ray reflecting film 8 formed of a metal oxide film, thereby suppressing the deterioration of the film. Further, because the halogen lamp 1 is held in place by the metal members 13, 13 and the support member 13a connected to the metal members so that the lamp can withstand external vibrations, the vibration insulation is improved.

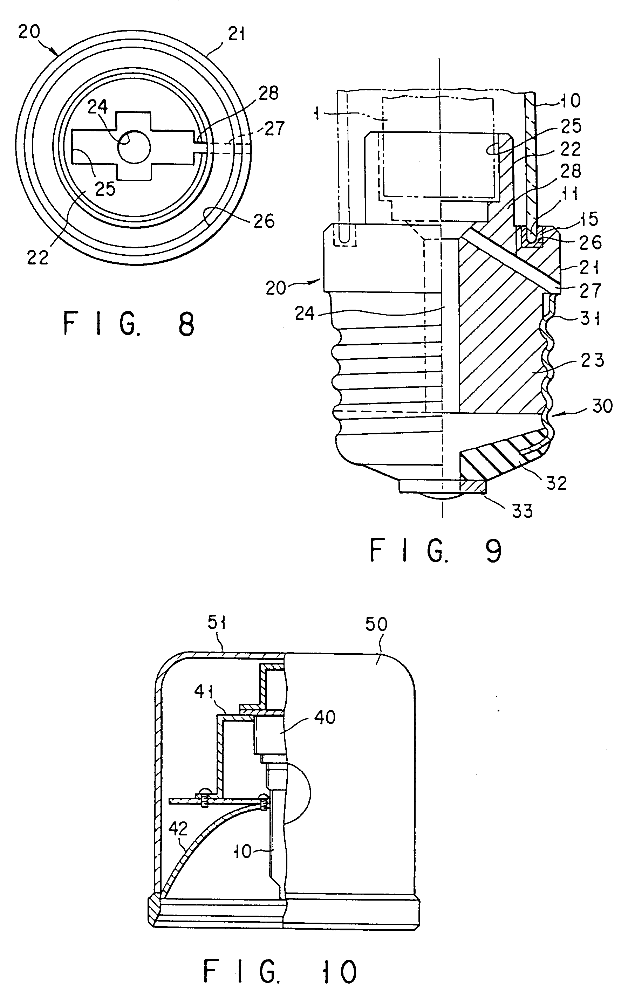

A third embodiment of the present invention will be explained, referring to Figs. 3, 8 and 9. The third embodiment has the same arrangement as that of the first embodiment except for the holder 20, and its explanation will be omitted. In Figs. 8 and 9, a halogen lamp 1 and an external bulb 10 are secured to the holder 20. The holder 20 is made of an insulating material, such as heat-resistant synthetic resin or ceramic, and has a flange section 21 formed in its mid-portion. A support bulb section 22 is formed at one end of the flange section 21 and a screw-threaded bulb section 23 is formed at the other end. The holder 20 has a through hole 24 in its center. In the support bulb section 22, a rectangular fixing hole 25 is formed into which the press-sealed portion 3 of the halogen lamp 1 is to be fitted. The press-sealed portion 3 is fitted into the fixing hole 25, and bonded with each other with an adhesive (not shown) such as silicon, whereby the halogen lamp 1 is secured to the holder 20.

The screw-threaded bulb section 23 formed at the other end of the holder 20 is covered with a metal base 30. The base 30 is an E26-type base, for example. The base shell portion 31 is screwed on the screw-threaded section 23 of the holder 20 and hermetically bonded with each other with an adhesive. The base shell portion 31 is provided with an eyelet terminal 33 serving as an external terminal, with an insulating cement 32 between them. Of the pair of external lead wires 7, 7 taken out from the press-sealed portion 3 of the halogen lamp 1, one external lead wire 7 is directed to the eyelet terminal 33 of the base 30 via the through hole 24 formed in the center of the holder 20, and is soldered to the eyelet terminal 33.

The other external lead wire 7 is directed to the opening of the base shell portion 31 through an insert hole 27 formed in the sidewall of the holder 20, and is soldered to the base shell portion 31. In a conventional lamp, only the insert hole 27 was made in the sidewall of the holder 20, so that the external lead wire 7 was threaded through the insert hole 27 as if a thread were passed through the eye of a needle. In this embodiment, however, a guide groove 28 running from the opening end of the support bulb section 22 to the insert hole 27 is formed in the sidewall of the holder 20, more precisely the wall of the support bulb section 22. This allows the external lead wire 7 to be threaded through the insert hole 27 by passing the lead wire through the guide groove 28 serving as a passage to the outside and moving the wire along the guide groove 28.

In one end of the flange section 21 of the holder 20, a fitting groove 26 is formed so as to surround the support bulb section 22. The fitting groove 26 is continuous along the circumference. The opening end 11 of the external bulb 10 is fitted into the groove. The external bulb 10, which is made of, for example, hard glass, is open at one end. This opening end 11 is put into the fitting groove 26. The groove 26 is filled with an elastic adhesive 15 such as silicon. The adhesive 15 hermetically bonds the opening end of the external bulb 10 to the holder. In this way, the halogen lamp 1 is enclosed with the external bulb 10, forming a double bulb structure. The inside of the external bulb is in the atmospheric state.

The feature of the present embodiment will be described. Because the guide groove 28 running from the opening end of the support bulb section 22 to the insert hole 27 is formed in the sidewall of the holder 20, more precisely the wall of the support bulb section 22, the lead wire 7 can be threaded through the insert hole 27 by passing the lead wire 7 through the guide groove 28 and moving the wire along the guide groove 28.

The effects of the present embodiment are as follows. Because the external bulb 10 is filled with air, this prevents deoxidization of the infrared-ray reflecting film 8 formed of a metal oxide film on the halogen lamp 1, thereby suppressing the deterioration of the film. Further, the halogen lamp 1 withstands external vibrations, which facilitates the passing of the lead wire 7, improving the working efficiency.

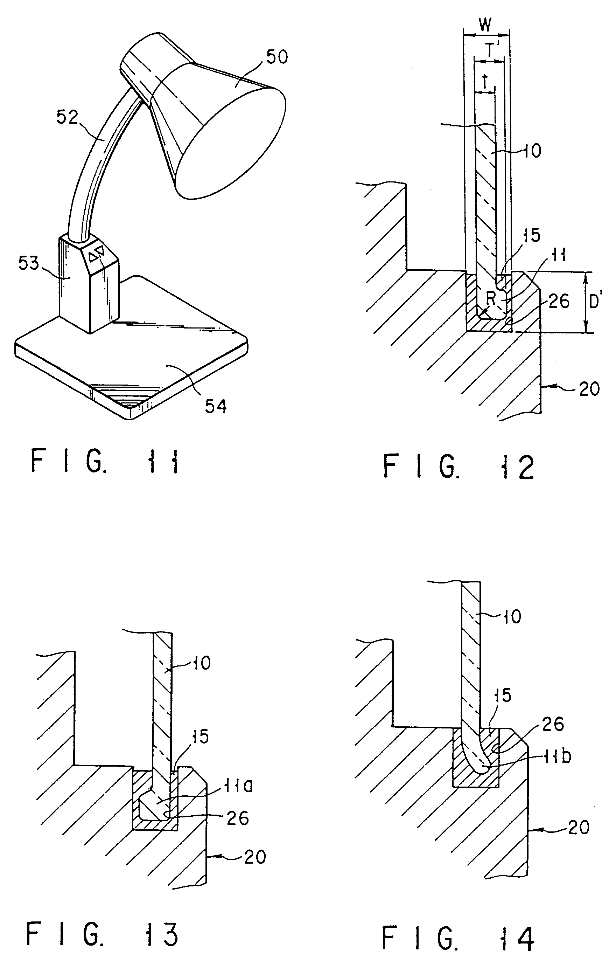

A fourth embodiment of the present invention will be described, referring to Figs. 10 and 11. A double-bulb halogen lamp of the present embodiment has the same structure as that of the first embodiment, so that its explanation will be omitted. In the top of an illuminator body 50 taking the form of a cylindrical container, a heat-dissipating hole is made. In the illuminator body 50, a reflecting mirror 42 and a socket 40 provided on a support 41. A double-bulb halogen lamp with an E26-type base 30 explained in the first embodiment is screwed in the socket 40 to form a lighting system. The lighting system may be supported by a support unit 52 installed on a stand 54 and provided with a power supply circuit 53 to form a desk lamp.

The operation of the embodiment will be described. The heat emitted from the halogen lamp 1 is dissipated outside the illuminator body 50 with the socket 40, thereby cooling the lighting system. Further, the infrared-ray reflecting film 8 formed on the halogen lamp 1 seals the heat in the halogen lamp 1 to minimize infrared rays dissipating outside, while heat is allowed to positively dissipate from the external bulb 10. This arrangement achieves a compact double-bulb halogen lamp capable of suppressing the temperature rise of the external bulb 10.

Thus, with the present embodiment, the illuminator body 50 can be made smaller, which consequently enable a more compact lighting system.

Referring to Figs. 3, 8, 9, and 12, a fifth embodiment of the present invention will be explained.

Fig. 3 is a view of a double bulb-type halogen lamp.

The halogen lamp 1 has a tubular (T-type) bulb 2 made of quartz glass, at one end of which a press-sealed portion 3 is formed. In the sealed section 3, a pair of metal foil conductors 4, 4 made of, for example, molybdenum is sealed. These metal foil conductors 4, 4 are connected to internal lead wires 5, 5. These internal lead wires 5, 5 are introduced into the bulb 2. Across them, a filament 6 made of tungsten is laid. The filament 6 is located so that the coil axis may be positioned on the bulb axis, that is, the C-type filament is used. The pair of metal foil conductors 4, 4 sealed into the sealed portion 3 is connected to external lead wires 7, 7 are connected. The bulb 2 is filled with halogen gas.

Such a halogen lamp is secured to a cylindrical holder 20. The cylindrical holder 20 is made of an insulating material, such as heat-resistant synthetic resin or ceramic, and has a flange section 21 formed in its mid-portion. A support bulb section 22 is formed at one end of the flange section 21 and a screw-threaded bulb section 23 is formed at the other end. The cylindrical holder 20 has a through hole 24 in its center. At one end of the support bulb section 22, a rectangular fitting hole 25 is formed into which the press-sealed portion 3 of the halogen lamp 1 is to be fixed. The press-sealed portion 3 is put into the fixing hole 25 and bonded with each other with an adhesive (not shown), whereby the halogen lamp 1 is secured to the holder 20.

The screw-threaded bulb section 23 formed at the other end of the holder 20 is covered with a metal base 30. The base 30 is an E26-type base. The base shell portion 31 is screwed on the screw-threaded section 23 of the holder 20 and hermetically bonded with each other with an adhesive (not shown). The base shell portion 31 is provided with an eyelet terminal 33 serving as an external terminal, with cement 32 between them.

Of the pair of external lead wires 7, 7 taken out from the press-sealed portion 3 of the halogen lamp 1, one external lead wire 7 is directed to the eyelet terminal 33 of the base 30 via the through hole 22 formed in the center of the cylindrical holder 20, and is soldered to the eyelet terminal 33. The other external lead wire 7 is directed to the opening in the base shell portion 31 through an insert hole 27 formed in the sidewall of the cylindrical holder 20.

In one end of the flange section 21 of the cylindrical holder 20, a fitting groove 26 is formed so as to surround the support bulb section 22. The fitting groove 26 is formed so that its depth d may be 1.5 or more times the groove width W (D' ≧ 1.5 W). The fitting groove 25 is continuous along the circumference. The opening end 11 of the external bulb 10 is fitted into the groove.

The external bulb 10, which is made of hard glass, is opened at one end. This opening end 11 is put into the fitting groove 26. In this case, the opening end 11 of the external bulb 10 is made thicker than the rest. That is, the opening end 11 is made thicker outward so that its thickness T' is larger than the thickness t of the remaining portions. Further, the opening end 11 is formed so that its corners may have curved surfaces with specified curvature, or R surfaces.

After such an opening end 11 of the external bulb 10 is put into the fitting groove 26, the groove 26 is filled with an elastic adhesive 15 made of silicon etc. The adhesive 15 hermetically bonds the opening end 11 of the external bulb 10 to the holder 20.

The inside of the external bulb is placed in the atmospheric state.

As a result, should the halogen lamp 1 break, the external bulb 10 prevents fragments of the external bulb 10 from flying about. That is, the external bulb serves as a protective cover.

Because in this embodiment, the opening end 11 of the external bulb 10 is made thicker than the rest (T'>t), the thicker opening end 11 is caught by the adhesive 15 filled in the fitting groove 26, thereby preventing the external bulb from coming off. The bonding area between the opening end 11 and the adhesive 15 increases, making the bonding strength greater. Consequently, the coming off or slanting of the external bulb 10 is prevented.

Because the depth D of the fitting groove 26 is greater than the groove width W, for example, 1.5 or more times the groove width W, the adhesive 15 filled in the groove 26 is embedded deeper, so that the contact area increases to make the bonding strength greater and a lateral load would not cause the external bulb 10 to incline with respect to the holder 2.

The R surfaces at the corners of the opening end 11 of the external bulb 10 prevents the stress from concentrating on the corners, avoiding breakage.

When an elastic adhesive is used as the adhesive 15, even if the external bulb 10 alternates between thermal expansion and contraction due to blinking, the elasticity of the adhesive will absorb the stress, thereby preventing the external bulb 10 from breaking or coming off.

In the above embodiment, the opening end 11 of the external bulb 10 is made thicker outward. Even when the opening end 11a of the external bulb 10 is made thicker inward as shown in Fig. 13, the same effect can be obtained.

Such thicker portions may be obtained easily by heating and melting the opening end to form padding.

In the above embodiments, the opening end of the external bulb 10 is made thicker (11, 11a). Instead of this structure, the opening end 11b of the external bulb 10 may be formed greater in diameter and the flare portion be put in the fitting groove 26, followed by the bonding with an adhesive 15. This allows the opening end 11b with the flare portion to be caught on the adhesive 15, preventing the external bulb 10 from coming off. When the external bulb 10 expands thermally, the elastic adhesive 15 absorbs the expansion of the opening end 11b. When the adhesive 15 can no longer absorb the expansion, the external bulb 10 expands relatively with respect to the holder 20 to absorb the expansion.

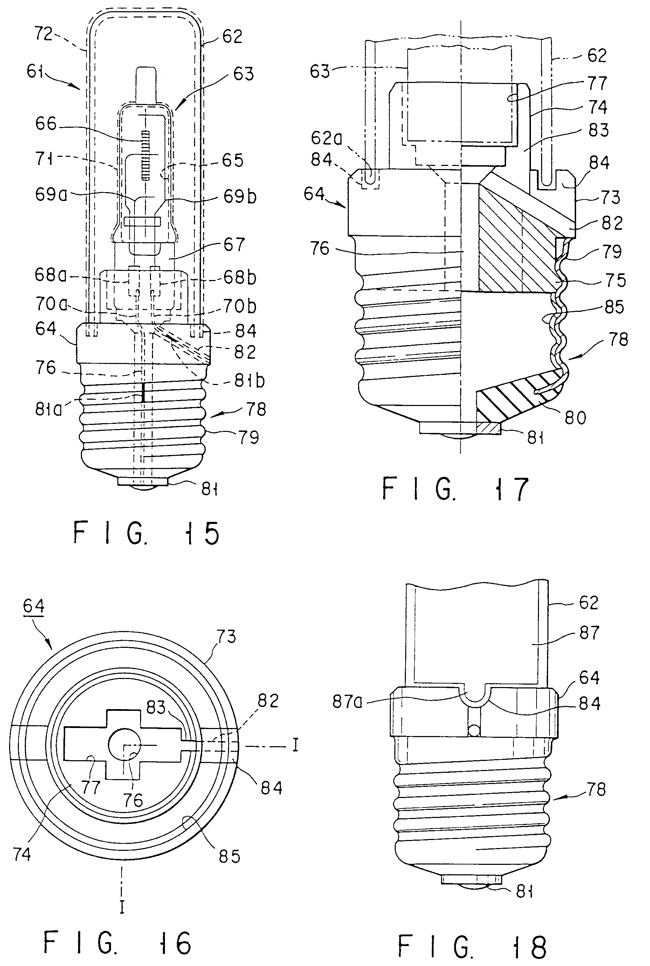

A sixth embodiment of the present invention will be described, referring to Figs. 15 through 18. The same or like parts in Figs. 15 through 18 are indicated by the same reference characters.

Fig. 15 is an elevation view of a sixth embodiment of the present invention. In the figure, a double-bulb lamp 61 has a cylindrical external bulb 62 and a halogen lamp 63 is placed in the external bulb both provided upright on a holder 64.

The halogen lamp 63 has a filament 66 built in a tubular (T-type) bulb 65 made of quartz glass. An inert gas and a trace amount of halide are sealed in the bulb 65, one end of which is sealed by a press-sealed portion 67 to form one-side sealed structure.

In the press-sealed portion 67, a pair of metal foil conductors 68a, 68b made of, for example, molybdenum is embedded. These metal foil conductors 68a, 68b are connected to internal lead wires 69a, 69b and to external lead wires 70a, 70b.

These internal lead wires 69a, 69b are introduced into the bulb 65. Across the ends of these wires, a filament 66 made of, for example, a tungsten coil is laid. The filament 66 is located so that the coil axis may be positioned on the axis of the bulb 64 to form a C-type filament.

Almost all the outer surface of the bulb 65 is coated with an infrared-ray reflecting film 71 that permits only visible light to pass through but reflects only infrared rays. By returning the infrared rays of the light emitted in the bulb 65 to the filament 66, the efficiency is improved. Infrared rays or heat rays are radiated toward the external bulb 62, which prevents the temperature in the bulb 62 to rise.

The external bulb 62 is made of, for example, hard glass. By coating its outer surface with a heat-resistant protective film 72 of Teflon (the trademark for polytetrafluoroethylene), the heat resistance and mechanical strength of the external bulb 62 are improved, which makes it possible to provide the smaller, lighter external bulb.

The cylindrical holder 64 is made of an insulating material, such as a heat-resistant synthetic resin or ceramic, and has a flange section 73 in its mid-portion as shown in Figs. 16 and 17. At one end of the flange section 73, a support bulb section 74 is formed, and a screw-threaded section 75 is formed at the other end.

The cylindrical holder 64 has a through hole 76 in its center. In the support bulb section 74, a rectangular fixing hole 77 is formed into which the press-sealed portion 67 of the halogen lamp 61 is to be fitted. The press-sealed portion 67 is put into the fixing hole 77 and bonded with each other with an adhesive (not shown) such as silicon.

The cylindrical holder 64 has the outer surface of the screw-threaded bulb section 75 covered with a metal base 78 of, for example, the E26 type. The base shell section 79 is screwed on the screw-threaded bulb section 75 of the holder 64 and hermetically bonded with each other with an adhesive (not shown). An eyelet terminal 81 serving as an external terminal is bonded to the base shell portion 79 with cement 80.

Of the pair of external lead wires 70a, 70b taken out from the press-sealed portion 67 of the halogen lamp 63 as shown in Fig. 15, one external lead wire 70a is introduced to the eyelet terminal 81 of the base 78 via the through hole 76 formed in the center of the cylindrical holder 64, and is soldered to the eyelet terminal 81.

In the middle of the external lead wire 70a, a first fuse 81a is inserted.

A second fuse 81b is inserted in the middle of the other external lead wire 70b. This external lead wire is directed to the opening of the base shell portion 79 through an insert hole 82 formed in the sidewall of the cylindrical holder 64 and is soldered to the base shell portion 79, as shown in Fig. 17. Conventionally, only the insert hole 82 was made in the sidewall of the cylindrical holder 84, so that the external lead wire 70b was threaded through the insert hole 82 as if a thread were passed through the eye of a needle.

In this embodiment, in the sidewall of the cylindrical holder 64, or the outer sidewall of the support bulb section 74, a guide groove 83 is formed along the axis so as to run from the opening end of the support bulb section 74 to the insert hole 82. The top end of the guide groove 83 is opened to the outer side of the cylindrical holder 64 as shown in Fig. 18 and is connected to a side opening 84 of U-shape opened upward in the figure. The side opening 84 and guide groove 83 connect the inside and the outside of the external bulb 62 to allow air to pass from the inside to the outside or vice versa.

Therefore, the other external lead wire 70b is directed to the outside of the cylindrical holder 64 through the guide groove 83. By moving the wire along the guide groove 83, the wire can be inserted in the insert hole 82 easily.

In the end of the flange section 73 of the cylindrical holder 64, a fitting hole 85 is formed so as to surround the support bulb section 74. The fitting hole 85 is formed continuously in the circumferential direction. The opening end 62a of the external bulb 62 is put in the fitting hole and hermetically bonded with each other with an adhesive such as silicon.

Therefore, the halogen lamp 63 is enclosed by the external bulb 62 to form a double bulb structure. The inside of the external bulb 62 is in the atmospheric state.

As shown in Fig. 17, the base 78 has the inner surface of the space below the bottom end of the cylindrical holder 64 coated with an oxide insulating film 86. When the first fuse 81a in one external lead wire 70a is fused and vaporized due to overcurrent, the oxide insulating film prevents the vaporized metal from adhering to the inner surface of the base 78 and short-circuiting. Because the oxide insulating film 86 insulates the inner surface of the base 78 as with the cylindrical holder 64 composed of an insulating material 7, it is possible to make the lamp unit more compact and lighter by shortening the axis length of the screw-threaded section 15 of the cylindrical holder 64.

In this embodiment, the external bulb 62 houses the halogen lamp 63, forming a double bulb structure. As a result, should the halogen lamp 63 break, the external bulb 62 prevents fragments of the lamp from flying about.

Because the halogen lamp 63 is coated with the infrared-ray reflecting film 71 that permits visible light to pass through, it is possible to suppress a rise in the temperature of the halogen lamp 63 itself and of the external bulb 62 enclosing the halogen lamp 63. As a result, the vaporization of the heat-resistant protective film 72 coating the external bulb 62 can be prevented and the protective film 72 enhances the heat resistance and strength of the external bulb 62. This helps to make the external bulb 62 and consequently the entire device smaller and lighter.

To thread the other external lead wire 70b of the halogen lamp 63 through the insert hole 82 in the sidewall of the cylindrical holder 64, the external lead wire 70b can be passed through the guide groove 83 and allowed to go through the insert hole 82 by moving the lead wire along the guide groove 83. This facilitates the insertion of the external lead wire 70b into the insert hole 82 remarkably, improving the working efficiency. Consequently, the efficiency of lamp assembly work is improved.

Because the guide groove 83 is formed in the sidewall of the support bulb section 74, it is enclosed by the external bulb. Thus, even if the external lead wire 70b projects from the guide groove 83, there is no danger that it sticks out of the device because it is inside the external bulb 62.

Further, because the top end of the guide groove 83 is connected to the side opening 84 of the cylindrical holder 64, the air inside and outside the external bulb 62 is allowed to flow in and out through the side opening 84 and guide groove 83. Thus, it is possible not only to cool the inside of the external bulb 62 with the open air but also to prevent the halogen lamp 63 from being overheated.

Still further, by engaging the hook 87a of the bulb changer 87 for bulb replacement with the inside of the U-shaped side opening 84 of the cylindrical holder 64, the lamp can be replaced easily with the external bulb 62 firmly gripped by the bulb changer 87.

The sixth embodiment achieves the same advantage as the first embodiment, which has been explained with reference to Figs. 6A and 6B.

## Claims

1. A double-bulb halogen lamp comprising:
a halogen lamp (1) which has a filament (6) placed in a tubular bulb (2) on whose surface an infrared-ray reflecting film (8) is formed, so that the filament (6) may be almost on the central axis of the bulb (2), and which seals halogen gas in it; and
a cylindrical external bulb (10) in which the lamp (1) is placed.

2. A double-bulb halogen lamp according to claim 1, characterized in that said halogen lamp (1) and said cylindrical external bulb (10) are each secured at one end and are provided with a holder (20) having an external terminal (30), the other end of the external bulb (10) being closed.

3. A double-bulb halogen lamp according to claim 2, characterized in that said holder (20) has a passage (27) formed in it which allows gas to flow between the inside of said external bulb (10) and the inside of a metal base (30).

4. A double-bulb halogen lamp according to claim 1, characterized in that the other end of said cylindrical external bulb (10) one end of which is closed is secured to a glass stem (9) securing said halogen lamp (1) and is provided with a metal base (30), the glass stem (9) having a passage (27) formed in it which allows gas to flow between the inside of said external bulb (10) and the inside of the metal base (30).

5. A double-bulb halogen lamp according to any one of claims 1 to 4, characterized in that the tubular bulb (2) in said halogen lamp (1) has an outer diameter of 10 to 15 mm, and said external bulb has an outer diameter of 20 to 30 mm, a length of 60 to 70 mm, and a thickness of 1 to 2 mm.

6. A double-bulb halogen lamp according to any one of claims 1 to 5, characterized in that said external bulb (10) has light-diffusing means.

7. A double-bulb halogen lamp according to any one of claims 1 to 5, characterized in that said external bulb (10) has color-temperature conversion means.

8. A lighting system comprising:
a double-bulb halogen lamp according to any one of claims 1 to 4; and
an illuminator body (50) having a socket (40) in which the lamp is installed.
